Europäisches Patentamt

European Patent Office

Office européen des brevets

(19)

(11) **EP 0 851 829 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(51) Int Cl.[7]: **B64C 3/30**

(21) Anmeldenummer: **97917986.8**

(22) Anmeldetag: **14.05.1997**

(86) Internationale Anmeldenummer:
**PCT/CH97/00190**

(87) Internationale Veröffentlichungsnummer:
**WO 98/03398 (29.01.1998 Gazette 1998/04)**

(54) **ADAPTIVER PNEUMATISCHER FLÜGEL FÜR STARRFLÜGEL-FLUGGERÄTE**

ADAPTIVE PNEUMATIC WING FOR FIXED WING AIRCRAFT

AILE PNEUMATIQUE ADAPTATIVE POUR AERONEFS A VOILURE FIXE

(84) Benannte Vertragsstaaten:
**AT BE CH DE DK ES FI FR GB IE IT LI NL PT SE**

(30) Priorität: **18.07.1996 CH 179996**

(43) Veröffentlichungstag der Anmeldung:
**08.07.1998 Patentblatt 1998/28**

(73) Patentinhaber: **Prospective Concepts AG
8702 Zollikon (CH)**

(72) Erfinder:
• **REINHARD, Andreas
CH-8008 Zürich (CH)**

• **TO, Frederick, E.
CH-4955 Gondiswil (CH)**
• **RAMSEIER, Otto
CH-2540 Grenchen (CH)**
• **KAMMER, Res
CH-3113 Rubingen (CH)**

(74) Vertreter: **Salgo, Reinhold Caspar, Dr.
Rütistrasse 103
8636 Wald (CH)**

(56) Entgegenhaltungen:
CH-A- 683 250            DE-A- 3 707 463
GB-A- 615 112            GB-A- 835 221
GB-A- 2 165 513          US-A- 2 979 287

EP 0 851 829 B1

## Beschreibung

Die vorliegende Erfindung bezieht sich auf einen pneumatischen, d.h. mit Druckluft beaufschlagten und durch gezielte Einwirkung von Druckluft in seiner Form veränderbaren, sog. adaptiven Flügel nach dem Oberbegriff des Patentanspruches 1. Pneumatische Flügel an sich wurden verschiedene vorgeschlagen und sind bekannt, beispielsweise aus zwei Gruppen von Dokumenten:

Die eine Gruppe beschreibt Flügelstrukturen, die aus einer Vielzahl rohrförmiger Elemente aufgebaut sind: US 3,473,761, US 4,725,021 und US 3,957,232; die Flügelstrukturen der anderen Gruppe sind durch Distanz-Fäden und textile Stege (sog. "Webs") in Form gehalten: DE 949 920, US 2,886,265, US 3,106,373 und US 3,481,569.

Dies ist auch der Fall für den in US 2,979,287 vorgestellten Flügel, dessen Form dadurch veränderbar ist, dass für die Oberfläche des Flügels auf seiner Oberseite ein Gewebe vorgeschlagen wird, dessen parallel zur Anströmrichtung liegenden Schussfäden dehnbar sind, während die senkrecht zur Anströmrichtung liegenden Kettfäden kaum dehnbar sind.

Der Nachteil dieser Konstruktion liegt einerseits darin, dass die Aenderung der Form mit der Aenderung der Flügelfestigkeit untrennbar gekoppelt ist, was unerwünscht ist und für den praktischen Einsatz gefährlich sein kann. Weiter sind die Fäden, welche hier das Gewebe auf der Unterseite mit dem Gewebe auf der Oberseite des Flügels verbinden, weder theoretisch noch praktisch geeignet, dem Flügel mittels der Kräfte, welche durch das Zusammenwirken von Zugspannungs- und Drucktensoren in ihren Befestigungspunkten entstehen, eine vorgesehene Form auch tatsächlich zu erteilen.

Pneumatische adaptive Flügel sind aus der Patentliteratur nicht bekannt.

Pneumatische Flügel an sich erfüllen nur dann eine sinnvolle technische Aufgabe, wenn sie in Bezug auf Gewicht, Herstellungskosten, Einfachheit der Handhabung und Flugeigenschaften gegenüber anderen, nichtpneumatischen Bauweisen Vorteile erbringen und zudem im Nichtbetriebszustande faltbar sind; diese genannten Vorteile brauchen nicht in allen erwähnten Bereichen vorzuliegen; eine Gesamtbewertung sollte jedoch einen pneumatischen Flügel vorteilhaft erscheinen lassen. Beurteilt man die Dokumente der ersten Gruppe, so erscheint ein pneumatischer Flügel gemäss US 3,473,761 schwer, kompliziert und teuer in der Herstellung und, was am schwersten wiegt, wenig geeignet, die statischen Probleme eines Flügels zu lösen. Der Flügel nach US 3,957,232 ist - im Gegensatz zum vorerwähnten Beispiel - aus Druckrohren grossen Durchmessers aufgebaut. Zur Erzeugung der notwendigen Umlaufs- oder Oberflächen-Spannung der Flügelhaut ist die vorgeschlagene Vorrichtung jedoch nicht geeignet, bzw erleidet Deformationen, die nicht dargestellt und erwähnt sind. Zieht man diese Deformationen der Druckrohre jedoch in Betracht, so sieht man, dass der Aufbau schwer und, in der beanspruchten Bauweise, wenig stabil ist. In der dritten genannten Druckschrift wird nur eine Holmstruktur aus pneumatischen Elementen aufgebaut; der Rest des Flügels erhält seine Form durch Segellatten.

Die Flügel oder Profile, die aus der zweiten Gruppe von Dokumenten bekannt sind, sind grundsätzlich aus Unter- und Oberhaut und die beide Elemente verbindenden Fäden oder Stegen aufgebaut. Die aus US 3,106,373 bekannte Lösung unterscheidet sich von den anderen insofern, als die ganze Flügelenveloppe aus einem luftdichten Distanzgewebe besteht, das in die gewünschte Form gebogen und geklebt wird. Am klarsten geht die Problematik dieser Gruppe aus DE 949 920 hervor. Dort ist das Flügelprofil symmetrisch. Der für einen Flügel - sei er Tragflügel oder Rotorblatt - notwendige Auftrieb ($C_A$) kann nur durch den Anstellwinkel erzeugt werden. Die in den anderen Druckschriften dargestellten Flügelprofile nehmen unter Druck keinesfalls die dargestellten Formen an: Im Bereich, wo Fäden bzw Stege in die Flügelhaut münden, wirken Druck- und Zugspannungstensoren gemeinsam und geben der Flügelhaut ihre endgültige Form. Insbesondere das aus US 2,886,265 bekannte Profil, in bestimmtem Ausmass aber auch die anderen, werden unter Druck im wesentlichen die aus DE 949 920 bekannte Form mit verschwindendem $C_A$ annehmen. Zudem eignet sich ein pneumatischer Flügel denkbar schlecht zum Anbringen von Steuerkabeln oder -stäben, insbesondere zur Bewegung des Querruders. Die insgesamt vorgeschlagenen Querruder sind völlig jenen von starren Flügelstrukturen nachgebildet und stellen keinen technischen Fortschritt dar.

Was bei allen zitierten Druckschriften fehlt, ist die eigentliche technische Lehre zur Herstellung der gesamten Profile, was fraglich werden lässt, ob solche Profile je gebaut, geschweige denn geflogen wurden.

Die Aufgabe, die durch die vorliegende Erfindung gelöst werden soll, besteht einerseits in der Schaffung eines pneumatischen Flügels mit vorgegebenem Profil und einer bestimmten Auftriebskennzahl $C_A$, mit angebautem pneumatischem Querruder unter Vermeidung von Steuerseilen oder -stäben, anderseits soll das Flügelprofil als Ganzes oder teilweise durch den Einsatz von druckluftbeaufschlagten Elementen modifiziert und hinsichtlich der geflogenen Geschwindigkeit optimiert werden, der nutzbare Geschwindigkeitsbereich also insgesamt vergrössert wird.

Die Lösung der gestellten Aufgabe ist wiedergegeben im kennzeichnenden Teil des Patentanspruches 1 hinsichtlich der Hauptmerkmale der Vorrichtung, in den Patentansprüchen 2 bis 26 hinsichtlich weiterer vorteilhafter und kennzeichnender Merkmale: Anhand der beigefügten Zeichnung wird die Erfindung näher erläutert. Es zeigen

Fig. 1     einen ersten im wesentlichen in Strömungsrichtung verlaufenden Schnitt durch einen erfindungsgemässen nicht adaptiven Flügel ohne den Ruderbereich,

Fig. 2     den gleichen Schnitt wie in Fig. 1, jedoch in einem zweiten Ausführungsbeispiel,

Fig. 3     einen wesentlichen Schritt in der Herstellung des Flügels bei kleiner Änderung des Flügelprofils pro Längeneinheit in der Längsachse

Fig. 4     das in Fig. 3 gezeigte Verfahren bei starker Änderung des Flügelprofils pro Längeneinheit in der Längsachse,

Fig. 5     einen Querschnitt durch eine Zelle des Flügels,

Fig. 6     einen Längsschnitt durch eine Zelle mit einer vorteilhaften Weiterbildung,

Fig. 7     einen ersten Querschnitt durch die Flügelhinterkante in neutraler Stellung,

Fig. 8     einen zweiten Querschnitt durch die Flügelhinterkante in nach oben weisender Stellung,

Fig. 9     einen Querschnitt durch die Flügelhinterkante in asymmetrischer Bauweise,

Fig. 10     ein Detail einer Variante zu Fig. 7, 8 oder 9.

Fig. 11a,b     einen insgesamt adaptiven Flügel ohne den Querruderbereich

Fig. 12     eine weitere Variante zur Betätigung des Querruders,

Fig. 13     eine Variante zu Fig. 2.

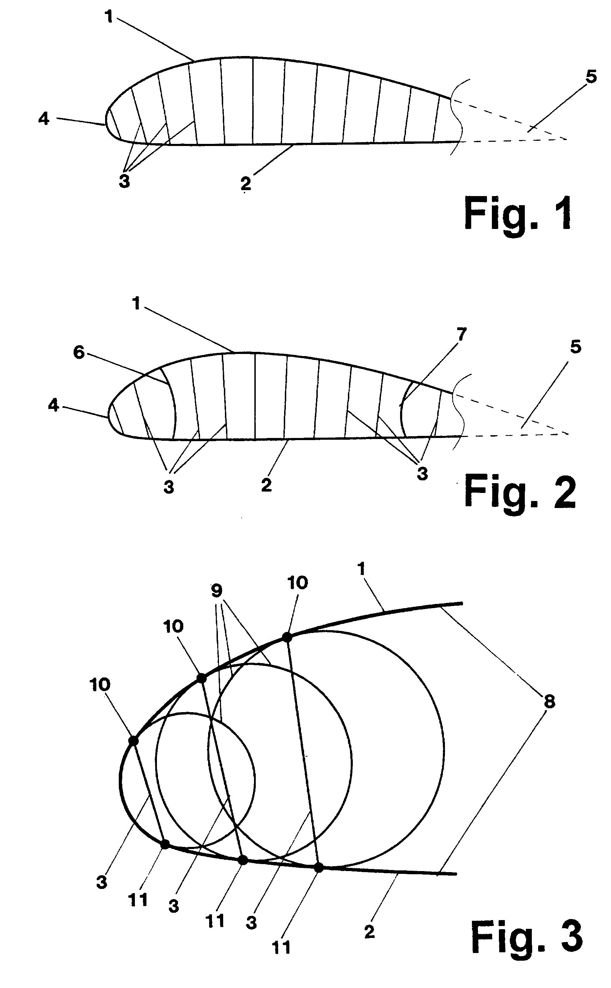

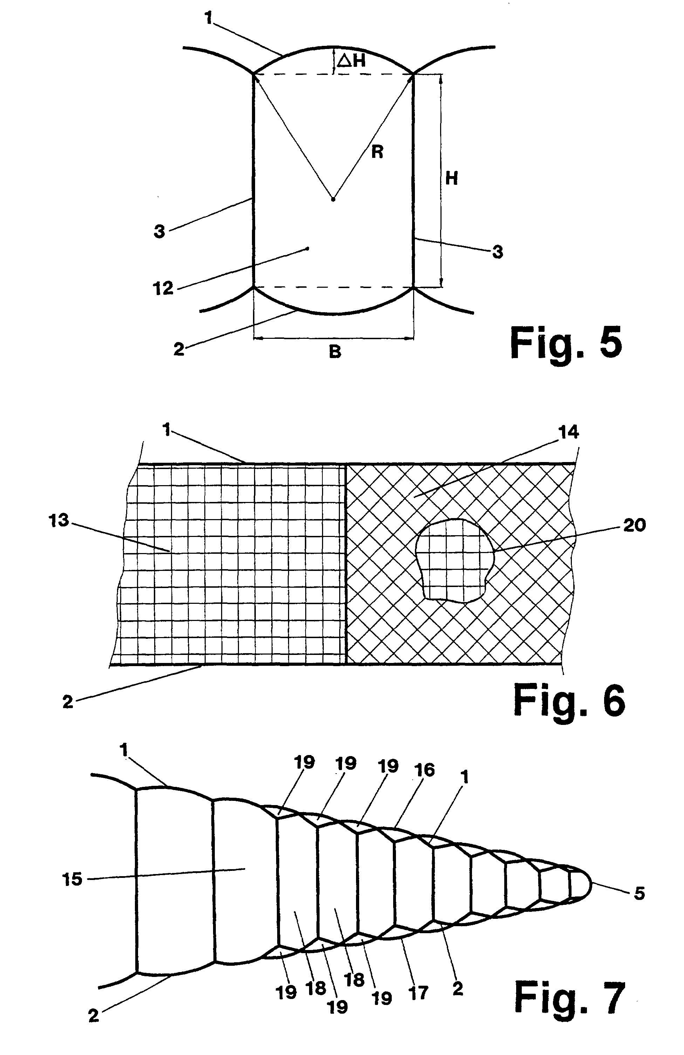

Fig. 1 zeigt einen in Strömungsrichtung verlaufenden Schnitt durch einen erfindungsgemässen, jedoch nicht adaptiven Flügel. Dieser weist eine luftdichte Haut auf, gegliedert in Oberhaut 1 und Unterhaut 2. Dazwischen verläuft eine Vielzahl von textilen Stegen 3, die beispielsweise aus gewebtem Material kleiner Dehnung bestehen; als Materialbeispiel seien Gewebe aus Aramid-Fasern genannt, obwohl auch neuere hochfeste und dehnungsarme Materialien nun auf dem Markt erscheinen. Die textilen Stege 3 sind luftdurchlässig und können, zum rascheren Druckausgleich zwischen den durch sie gebildeten Zellen, sogar Löcher aufweisen. Anderseits können einzelne Stege 3 luftdicht ausgeführt sein, damit ein allfälliger Druckverlust nicht den ganzen Flügel betrifft. Der durch Ober- und Unterhaut 1, 2 und textile Stege 3 gebildete Hohlkörper ist im nicht aufgeblasenen Zustand flach und kann leicht gefaltet oder gerollt werden. Im aufgeblasenen Zustand nimmt er die durch Fig. 1 schematisch dargestellte Form an, wobei Ober- und Unterhaut 1, 2 sich zwischen den Stegen 3 selbstverständlich auswölben, wie zu Fig. 5 näher beschrieben.

Die Umlaufs- oder Zugspannung $\sigma_z$ von Ober- und Unterhaut 1, 2 wird bestimmt durch die Höhen $\underline{H}$ der Stege 3, da für eine bestimmte Stelle des Flügels gilt: $\sigma_z \approx \frac{\Delta p H \cdot L}{2L} = \frac{\Delta p \cdot H}{2}$,

wo L = Länge des betrachteten Steges
$\Delta p$ = Ueberdruck im Innern des Flügels.

Daraus ist ersichtlich, dass die Spannung $\sigma_z$ bei kleiner werdender Flügeldicke, also bei An- und Abströmkanten 4, 5 abnimmt, allenfalls unter eine Grösse, die für die Stabilität und Tragfähigkeit des Flügels brauchbar ist.

Fig. 2 zeigt eine erfindungsgemässe Massnahme, mit welcher dieser Tatsache begegnet werden kann: in einem gewissen Abstand von den An- und Abströmkanten 4, 5 wird ein luftdichter Steg 6, 7 eingelegt, der gestattet, den Flügelteil, der vor dem Steg 6 liegt und jenen hinter dem Steg 7 auf einen höheren Druck $\Delta P_2$ zu setzen als den Mittelteil des Flügels, der unter dem Ueberdruck $\Delta P_1$ steht, wie in Fig. 2 eingetragen. Selbstverständlich könnte jede durch die Stege 3 definierte Zelle mit einem eigenen Druck beaufschlagt werden, was luftdichte Stege 3 bedingt. Dies allerdings verlangt eine individualisierte Druckluftversorgung für die einzelnen Zellen.

Fig. 3 ist eine erste Darstellung des herstellungsmässigen Vorgehens zur Bestimmung der Lage und Stellung der Stege 3. Dieses ist angebracht bei Flügeln oder Flügelteilen, bei denen die Profilvariation pro Längeneinheit in Richtung der Flügelachse verhältnismässig klein oder gar Null ist. Um die Zeichnung übersichtlich zu behalten, sind viel weniger Stege 3 eingetragen, als in Wirklichkeit notwendig sind. Ist das Soll-Profil des Flügels - in mehreren Schnitten analog zur Darstellung von Fig. 1 - aufgrund der angestrebten Flugcharakteristik festgelegt, so ergibt dies eine Flügelenveloppe 8. In diese kann eine Schar von Schmiegekreisen 9 eingelegt werden, die Ober- und Unterhaut 1, 2, also die Enveloppe 8, in je zwei Punkten 10, 11 berühren. Die so ermittelten Punkte 10, 11 sind - im betrachteten Profilschnitt - die Befestigungspunkte der Stege 3. Damit wird erfindungsgemäss bewirkt, dass der unter Druck gesetzte Flügel die vorgesehene, aber im schlaffen Zustand konfektionierte Form auch wirklich einnimmt, da die Winkel zwischen Steg 3 und Enveloppe 8 in beiden Punkten 10, 11 dieselben sind. Damit sind die aus den Druck- und Zugspannungstensoren sich ergebenden Kraftkomponenten sowohl in Ober- und Unterhaut 1, 2, als auch im betrachteten Steg 10 jeweils im wesentlichen spiegelbildlich dieselben. Aufgrund der zu Fig. 3 beschriebenen Konstruktion der Stege 3 lassen sich für jeden gewählten Schnitt durch den Flügel die Koordinaten der Berührungspunkte 10, 11, die gleichzeitig jene der Schnittpunkte der Enveloppe 8 mit den Ebenen der Stege 3 sind, genau ermitteln. Ebenso sind die Höhen $\underline{H}$ der Stege 3 bekannt. Daraus lassen sich sowohl die Dimensionen der für die Stege 3 verwendeten Gewebebahnen, als auch die Lagen der Linien, entlang welcher die Stege 3 mit den Enveloppen verbunden werden sollen, konstruieren.

Falls für die Enveloppe 8 ein bereits luftdichtes Gewebe verwendet wird, werden die Nahtlinien anschliessend mit einer mit dem dichtenden Kunststoff sich verbindenden Kunststoff abgedichtet. Soll die Enveloppe 8 erst anschliessend an das Vernähen der Stege abgedichtet werden, so geschieht dies beispielsweise nach an sich bekannten Verfahren der Kunststoffkaschierung von Geweben.

An Stelle einer Näh-Verbindung kann erfindungsgemäss auch eine Verschweissung treten. Hier sind mehrere Varianten vorgesehen:

Entweder sind die verwendeten Textilien direkt schweissbar; dann werden die Stege 3 an ihren oberen und unteren Kanten beispielsweise um etwa 90° abgeknickt und die so entstehenden Streifen thermisch oder mit Ultraschall mit Ober- und Unterhaut 1, 2 verschweisst. Sind die textilen Materialien hingegen nicht direkt verschweissbar, so können die oben genannten, durch Umknicken entstandenen Streifen vor dem Umknicken mit Kunststoff kaschiert werden und dann mit der beispielsweise bereits kunststoffkaschierten Ober- und Unterhaut 1, 2 verschweisst werden nach einem der genannten Verfahren.

Eine dritte erfindungsgemässe Variante besteht darin, nicht nur die Stege 3 in der beschriebenen Weise vorzubehandeln, sondern auch Ober- und Unterhaut 1, 2 mit Kunststoff-Streifen zu versehen und sie anschliessend mit den Streifen der Stege 3 zu verschweissen. Anschliessend wird die ganze Enveloppe 8 dichtend kaschiert.

Fig. 4: Weist ein ganzer Flügel oder auch nur Teile eines solchen ein in Längsrichtung stark veränderliches Profil auf, so ist das zu Fig. 3 geschilderte Vorgehen zu modifizieren. Ist das angestrebte Flügelprofil gegeben, so werden beispielsweise auf der Oberhaut 1 Befestigungslinien 25 für die textilen Stege 3 festgelegt entsprechend der notwendigen Biegesteifigkeit des Flügels. Anschliessend werden Schmiegekugeln 26 eingelegt, die die Befestigungslinie 25 und gleichzeitig die Unterhaut 2 berühren. Die Menge der Berührungspunkte der Schmiegekugeln 26 mit der Unterhaut 2 ergibt die mit der Ziffer 27 belegten Befestigungslinien in der Unterhaut 2.

Fig. 5 ist die schematische Darstellung einer - sich im wesentlichen über die Flügellänge $\underline{L}$ hin sich erstreckenden - Zelle 12, gebildet durch Ober- und Unterhaut 1, 2 und zwei benachbarte Stege 3. Wird das Flügelvolumen unter Druck gesetzt, so wölben sich Ober- und Unterhaut 1, 2, wie bereits gesagt, aus. Diese Auswölbungen haben Kreisbogenform vom Radius R, der bestimmt ist durch die Höhe $\underline{H}$ der Stege 3 und deren Abstand $\underline{B}$. Sofern das Material der verwendeten Gewebe nur eine kleine kraftabhängige Dehnung aufweist, ist die Höhe $\Delta H$ der Auswölbung nur von $\underline{H}$ und $\underline{B}$, hingegen nicht vom Druck $\Delta p$ abhängig, sofern $\Delta p > 0$; dies aus dem Grunde, dass sowohl die auf Ober- und Unterhaut 1, 2 wirkenden Druck -, als auch die Zugspannungstensoren beide linear vom Druck $\Delta p$ abhängen. Für die Stabilität und Tragfähigkeit des Flügels sind hingegen die in den Stegen 3 wirkenden Zugspannungen entscheidend. Wird ein erfindungsgemässer Flügel durch die erzeugten Auftriebskräfte belastet, so bewirken diese Biegemomente in der Flügelwurzel, die im wesentlichen in der oberen Hälfte der Stege 3 die Zugspannungen in Flügelrichtung verkleinern, in der unteren Hälfte jedoch vergrössern. Während das Ueberschreiten einer gewissen Maximalspannung in der unteren Hälfte der Stege die Grenzen der Materialzugfähigkeit betrifft, führt das Unterschreiten in der oberen Hälfte der Stege 3 zum Einknicken des Flügels. Diese Knickfestigkeit ist proportional zum Druck $\Delta p$ und abhängig von der Höhe $\underline{H}$ und der Breite $\underline{B}$ der Zellen 12.

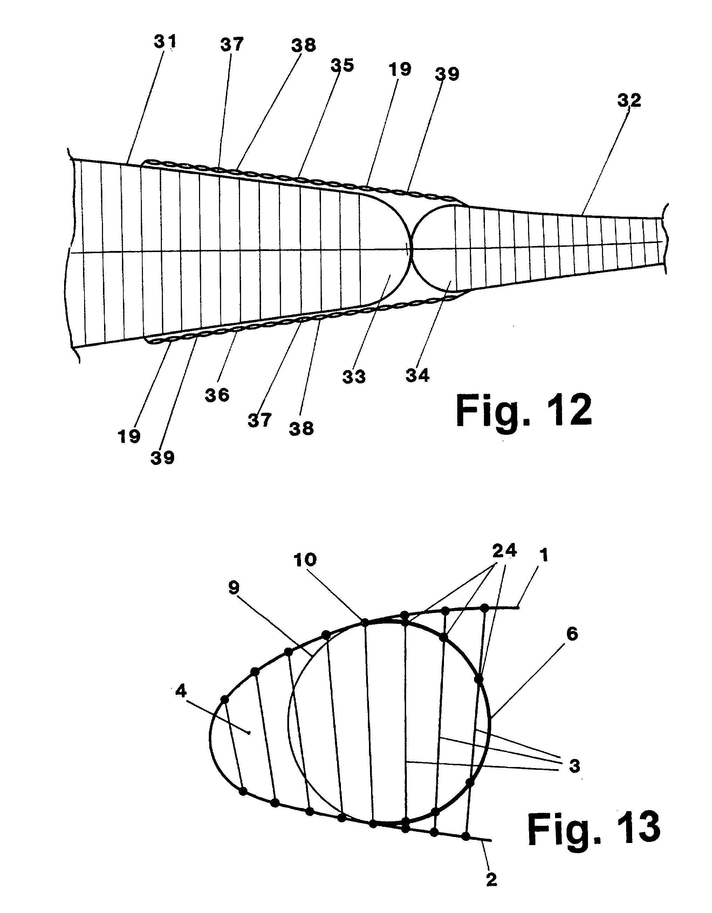

Daher ist es erfindungsgemäss vorgesehen, die Breite $\underline{B}$ der Zellen 12 bei abnehmender Flügelhöhe $\underline{H}$ zu verkleinern, dergestalt, dass die Breite $\underline{B}$ der Zellen 12 im wesentlichen proportional ist zu deren Höhe $\underline{H}$. Als vorteilhafte Weiterbildung wird das Einfügen der zwei luftdichten Stege 6, 7 gemäss Fig. 2 oder Fig. 13 betrachtet, was gestattet, in den Bereichen verkleinerter Zugspannung in der Enveloppe 8, den Druck $\Delta p$ zu erhöhen, um sowohl Stabilität, als auch Tragkraft des Flügels zu steigern.

Fig. 6 zeigt eine vorteilhafte Ausbildung eines Steges 3 in der Längsrichtung des Flügels; nach links ist die Flügelspitze zu denken, nach rechts die Flügelwurzel. Ueber die ganze Länge des Steges 3 ist das verwendete dehnungsarme Gewebe- durch die Ziffer 13 gekennzeichnet - so eingesetzt, dass der Fadenverlauf einerseits in Längsrichtung und, anderseits senkrecht dazu verwendet wird: Die Zugspannungen im Steg 3 werden also direkt durch die horizontal und vertikal wirkenden Kräfte erzeugt. Gegen die Flügelwurzel hin nehmen, wie zu Fig. 4 ausgeführt, die Zugspannungen im unteren Teil der Stege 3 zu, im oberen ab. Hier wird nun das Gewebe 13 durch ein zweites, ebenfalls dehnungsarmes Gewebe 14 ergänzt, dessen Fadenverlauf beispielsweise beispielsweise um 45° gegenüber jenem des ersten Gewebes 13 gedreht ist. Im Felde des zweiten Gewebes 14 ist zeichnerisch ein Ausbruch 20 angebracht, in welchem das dahinterliegende erste Gewebe 13 sichtbar gemacht ist. Diese Anordnung gestattet, den Spannungsaustausch zwischen horizontaler und vertikaler Richtung zu verbessern und die erwähnte mögliche Ueberbeanspruchung des unteren Randes der Stege zu verhindern.

Im Sinne dieser erfindungsgemässen Fortbildung ist es auch, zwei oder mehr Lagen von ersten oder zweiten Geweben 13, 14 einzusetzen.

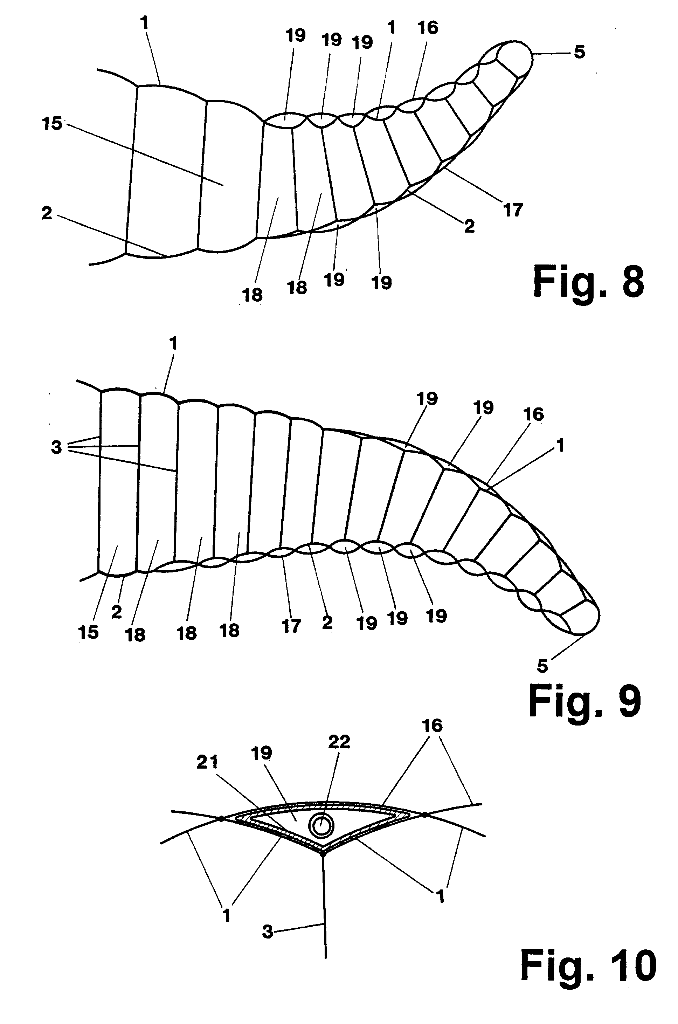

Fig. 7 zeigt in schematischer Weise die Gestaltung der Ablaufkante eines adaptiven Flügels. Von einer, hier mit der Ziffer 15 belegten, Zelle an ist sowohl die Oberhaut 1 als auch die Unterhaut 2 jeweils mit einer zweiten, hier mit 16, 17 bezeichneten, oberen und unteren Doppelhaut überzogen. Diese sind mit Ober- und Unterhaut 1, 2 jeweils etwa in den Mitten der Breite $\underline{B}$ der auf die Zelle 15 folgenden Zellen 18 vernäht. Dadurch entstehen über die Breite des Querruders Kanäle 19 etwa der in der Fig. 10 dargestellten Form, wobei in Betracht zu ziehen ist, dass die Höhe $\Delta H$ der Auswölbungen stark überhöht dargestellt ist.

Ist der Druck in den Zellen 18 von der Grösse $\Delta P_1$, so ist jener in den Kanälen 19 im wesentlichen von der gleichen Grösse. Dadurch werden Ober- und Unterhaut 1, 2 im Bereich der Zellen 18 etwa im geradlinigen Zickzack verformt und nur die Doppelhäute 16, 17 weisen bogenförmige Auswölbungen auf.

Wird nun der Druck $\Delta p_2$ in den unter den Doppelhäuten 16, 17 liegenden Kanälen 19 erhöht, dergestalt, dass $\Delta p_2 > \Delta p_1$, so vergrössern sich die Auswölbungen der Doppelhaut 16, bzw. 17, und an der im Zickzack gestreckten Oberhaut entstehen Auswölbungen in Richtung der Zellen 18. Dadurch werden die Kanäle 19 verdickt und - wegen der kleinen Dehnbarkeit der verwendeten Gewebe - in Strömungsrichtung verkürzt, wodurch der Flügel im Bereich der Zellen 18 die in Fig. 8 dargestellte Form annimmt. Um den Effekt zu verstärken, kann der Druck $\Delta p_3$ in den Kanälen 19 auf der Flügelunterseite gesenkt werden, dergestalt, dass

$$\Delta p_2 > \Delta p_1 > \Delta p_3.$$

Werden die genannten Drücke jedoch so eingestellt, dass

$$\Delta p_2 < \Delta p_1 < \Delta p_3,$$

dann erfolgt die Wölbung des Flügels nach unten.

Diese anhand von Fig. 7, 8 charakterisierte Ausgestaltung des Flügels kann nur einen Teil oder aber die ganze Spannweite eines Flügels umfassen. Ebenso ist die Anzahl der von dieser Gestaltung betroffenen Zellen 18 abhängig von der gewählten Flügelcharakteristik.

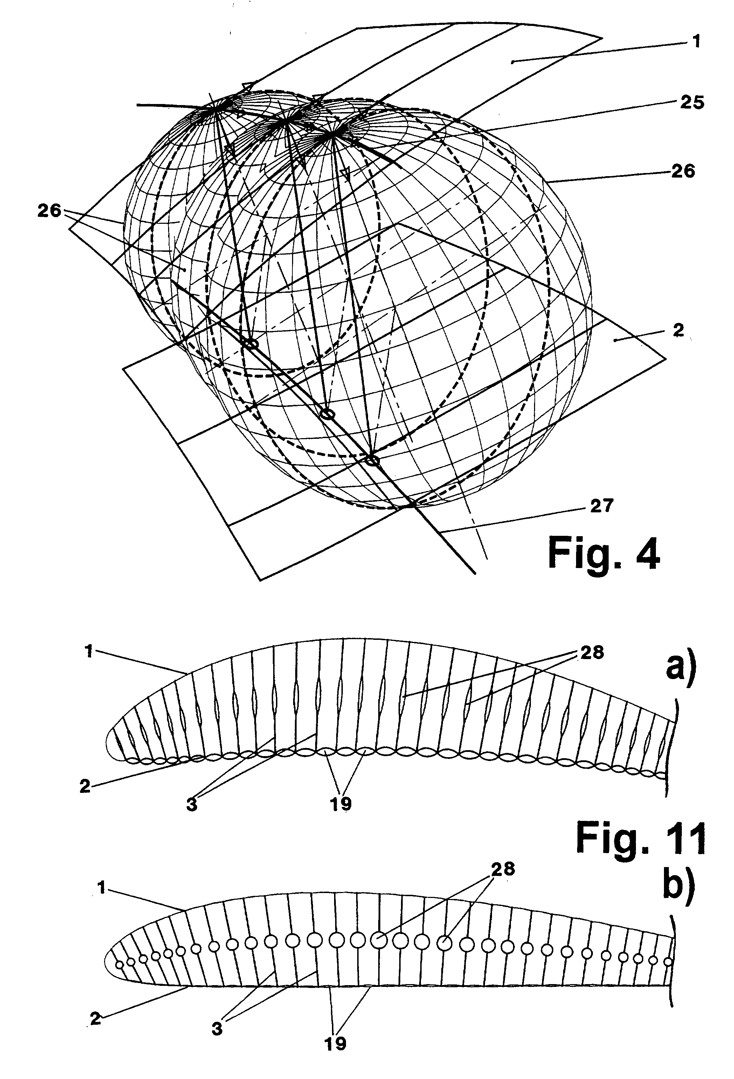

In einer in Fig. 9 dargestellten Variante erstreckt sich die untere Doppelhaut 17 über mehr Zellen 18, als die obere Doppelhaut 16. Damit kann durch Druckerhöhung in den unteren Kanälen 19 die Form des Flügels und damit der $c_A$-Wert über einen grösseren Bereich verändert werden. Damit ändert sich auch - allein durch die Modifikation der Ablaufkante - der optimale Geschwindigkeitsbereich des Flügels. Ebenfalls erfindungsgemäss ist es, die Ausbildung des Flügels gemäss Fig. 9 im wesentlichen über die ganze Flügelunterseite zu erstrekken, allenfalls in Verbindung mit einer weiteren Formänderungsmöglichkeit, wie sie in Fig. 11a, b dargestellt ist.

Die Ausbildung des erfindungsgemässen Flügels gemäss Fig. 7, 8 oder 9 eignet sich auch, allenfalls bei verringerter Anzahl oder lokal eingeschränkter Verteilung der Kanäle 19, als Querruder. Erstrecken sich die Kanäle 19 im wesentlichen über die ganze Flügelhälfte, so lässt sich der für eine bestimmte Querlage des Flugzeuges notwendige Ruderausschlag verringern.

Fig. 10 zeigt eine Variante zur beschriebenen Ausbildung der Kanäle 19; stellvertretend ist nur ein Kanal 19 dargestellt; die anderen sind entsprechend ausgebildet. Im Kanal 19, gebildet aus dem Raum zwischen Oberhaut 1 und oberer Doppelhaut 16 ist ein dünnwandiger Schlauch 21 aus einem Elastomer eingelegt. An seinen Enden ist dieser Schlauch verschlossen; beispielsweise am gegen die Flügelwurzel hin liegenden Ende mündet der Druckschlauch 22 in den Kanal 19. Selbstverständlich können an mehreren Stellen Druckschläuche 22 in den elas-tomeren Schlauch 21 eingeführt werden, um die Druckänderung zu beschleunigen. Wird die in Fig. 10 gezeigte Variante gewählt, so erübrigt sich ein Abdichten von oberer und unterer Doppelhaut 16, 17, da die Dichtungsfunktion nun vom elas-tomeren Schlauch 21 übernommen wird.

Anstelle von Seilen oder Stäben führen bei dieser beschriebenen Ausführung der Querruder Druckschläuche 22 zu den Flügeln - konkret zu den Kanälen 19. Die Steuerung kann konventionell, beispielsweise durch einen Steuerknüppel und - bei Varianten nach Fig. 9 - durch eine Landeklappenbetätigung erfolgen, bewirkt jedoch nicht wie bei Steuerseilen eine Zugkraft, sondern eine Druckveränderung in den Kanälen 19.

Fig. 11 a, b sind die Darstellungen eines insgesamt adaptiven Flügels. Hier weisen die textilen Stege 3 - deren Anzahl reduziert dargestellt ist - je einen Kanal 28 auf. Diese Kanäle 28 sind ausgeführt, wie die Kanäle 19 gemäss Fig. 7, 8, 9 oder als Taschen 29, die je einen elastomeren Schlauch 21 aufnehmen, wie in Fig. 10 beschrieben. Die Unterseite des Flügels ist ausgestaltet, wie zu Fig. 9 geschildert.

In Fig. 11 a sind die Kanäle 19 auf der Unterseite des Flügels auf Ueberdruck in Bezug auf das Flügelinnere, die Kanäle 19 in den Stegen 3 sind annähernd drucklos oder nur so weit mit Druck beaufschlagt, dass die Stege 3 keine Verkürzung erfahren.

Wird nun der Druck in den Kanälen 19 in den Stegen 3 erhöht, so nehmen die Höhen der Stege 3 ab und der ganze Flügel wird flacher, wie in Fig. 11 b gezeigt. Die Formveränderung kann sowohl über die Grösse der Kanäle 19 in den Stegen, als auch über den Druck gesteuert werden; prinzipiell kann jeder dieser Kanäle 19 mit einem individuellen Druck beaufschlagt werden. Soll jedoch nur ein einziger Druck verwendet werden, so ist die Grösse der Kanäle 19 der einzige Parameter der Höhenveränderung des Profils.

Durch die Verkürzung der Stege ändert sich jedoch auch die Wölbung des Flügels. Um eine Vergrösserung der Wölbung auszugleichen, können nun die Kanäle 19 auf der Unterseite des Flügels entspannt werden. Damit wird der Flügel niedriger bei steuerbarer Aenderung der Wölbung.

Die Ablaufkante ist in Fig. 11 a, b nicht dargestellt. Sie kann gestaltet werden gemäss der Darstellung von Fig. 7. Anstelle der Ausführung nach Fig. 7 kann jedoch - in jedem Ausführungsbeispiel - auch eine Gestaltung nach Fig. 12 vorgesehen werden.

Hier ist der Flügel aufgebaut aus zwei zunächst getrennten Teilen, einen Tragflügel 31 und einem Querruder 32. Die beiden Teile 31, 32 sind verbunden - beispielsweise durch Schweissen oder Kleben - in den äussersten Bereichen zweier Zellen 33, 34, jedoch über die ganze Breite des Querruders 32. Die Zelle 33 begrenzt den Tragflügel 31 nach hinten, die Zelle 34 begrenzt das Querruder nach vorne. Wegen der statischen Funktion des Tragflügels 31 ist davon auszugehen, dass der Druck in Zelle 33 höher ist als in Zelle 34. Verbunden sind Tragflügel 31 und Querruder 32 durch zwei flache Aktuatoren 35, 36, die im Prinzip gleich aufgebaut und dimensioniert sind. Der Aufbau jedes Aktuators 35, 36 besteht aus je einer Doppelhaut 37, 38 mit luftdichten Kanälen 19, die zwischen Längslinien 39, entlang derer die Doppelhäute 37, 38 verbunden sind, entstehen. In neutraler Lage des Querruders 32 sind beide Aktuatoren 35, 36 mit Druck beaufschlagt, so dass eine mittlere Verkürzung eintritt. Diese hat zur Folge, dass das Querruder 32 zum Ende des Tragflügels 31 gezogen wird und, wegen des Druckunterschiedes in den Teilen 31, 32 die gezeichnete Einbuchtung der Zelle 34 entsteht.

Soll das Querruder nun beispielsweise nach oben ausgeschwenkt werden, so wird der Druck im oberen Aktuator 35 erhöht und im unteren Aktuator 36 gesenkt. Aktuator 35 wird dadurch verkürzt, Aktuator 36 verlängert, was den vorgesehenen Ausschlag des Querruders ergibt.

Erfindungswesentlich ist, dass die Aktuatoren 35, 36 entlang je einer Linie je mit dem Tragflügel 31 und dem Querruder 32 verbunden sind und linienbezogene Kräfte bewirken. Anstelle der in Fig. 12 dargestellten Aktuatoren 35, 36 erfüllen auch andere, Linienkräfte erzeugende, Aktuatoren die gestellte Aufgabe.

Eine Variante zum Ausführungsbeispiel gemäss Fig. 2 ist in Fig. 13 dargestellt. Das Ausführungsbeispiel gemäss Fig. 2 arbeitet mit einem vorgegebenen Druckunterschied zwischen An- und Abströmkanten, 4, 5 einerseits und dem dazwischenliegenden Teil des Flügels anderseits. Dabei kann die Wölbung der Stege 6, 7 und damit auch deren Sehnen ermittelt werden, damit der Flügel die vorbestimmte Form annimmt. Soll jedoch der Ueberdruck von Anströmkante 4, Mittelteil des Flügels und Abströmkante 5 variabel bleiben, so ist die in Fig. 13 gezeigte Variante vorzuziehen. Hier ist nur der luftdichte Steg 6 bei der Anströmkante 4 gezeigt. Die Konstruktion für die Abströmkante 5 ist völlig analog. Der luftdichte Steg 6 ist so bemessen, dass er den von Flügelnase abliegenden Teil desjenigen Schmiegekreises 9 bildet, der die Abtrennung von Anströmkante 4 und Mittelteil des Flügels bilden soll. Dann wird der luftdichte Steg 6 durchstossen von luftdurchlässigen Stegen 3. Die Verbindung des Steges 6 mit den Stegen 3 an Befestigungsstellen 24 geschieht nach dem gleichen Vorgehen, wie für die Verbindung der Stege 3 mit Ober- und Unterhaut 1, 2 beschrieben.

## Patentansprüche

1. Pneumatischer, mit Druckluft zu füllender adaptiver Flügel mit Anströmkante (4) und Abströmkante (5) für ein Fluggerät, der besteht aus einer luftdichten, textilen Enveloppe (8), gegliedert in eine die obere Decke des Flügels bildende luftdichte Oberhaut (1) und eine die untere Decke des Flügels bildende luftdichte Unterhaut (2) und einer Vielzahl von Oberhaut (1) und Unterhaut (2) verbindenden textilen Stegen (3), **dadurch gekennzeichnet, dass**

   - die Stege (3) so eingelegt sind, dass die Befestigungspunkte der Stege (3) mit Oberhaut (1) und Unterhaut (2) durch die Berührungspunkte (10, 11) der jeweiligen in das Flügelprofil eingelegten Schmiegekugeln (26) gegeben sind, sodass die durch das Zusammenwirken von Zugspannungs- und Drucktensoren in diesen Befestigungspunkten entstandenen Kräfte dem Flügel die vorgesehene Form erteilen,

   - die Stege (3) mit Ober- und Unterhaut (1, 2) entlang Verbindungslinien (25, 27) verbunden sind, deren erste (25) auf einer der Häute (1, 2) entsprechend der notwendigen Biegesteifigkeit des Flügels festgelegt wird und deren zweite (27) sich auf der anderen der Häute (2, 1) als Verbindung aller Berührungspunkte der Schmiegekugeln zwischen Oberhaut (1) und Unterhaut (2) ergibt, welche die erste Verbindungslinie (25) und die andere der Häute (2, 1) berührt,

   - mindestens ein Teil der Stege (3) luftdurchlässig ist,

   - der gegenseitige Abstand $\underline{B}$ der Stege (3) im wesentlichen proportional ist zur örtlichen Höhe des Flügels,

   - Mittel vorhanden sind, um die Höhe und/oder die Form des Flügels durch Anwendung von Druckluft zu verändern, welche darin bestehen, dass in der Oberhaut (1) und/oder in der Unterhaut (2) und/oder in Stegen (3) eine Doppelhaut (16, 17, 37, 38) vorhanden ist, welche luftdichte Kanäle (19, 28) bildet, die separat mit Druck beaufschlagt werden können.

**2.** Pneumatischer adaptiver Flügel nach Patentanspruch 1, **dadurch gekennzeichnet, dass** Mittel zur Veränderung von Höhe und/oder Form des Flügels durch Anwendung von Druckluft so angeordnet und ausgestaltet sind, dass über den Bereich der Landeklappen die Oberhaut (1) und die Unterhaut (2) durch je eine Doppelhaut (16, 17) ergänzt sind, welche jeweils im wesentlichen in der Mitte zwischen zwei Stegen (3) mit der Oberhaut (1) einerseits und mit der Unterhaut (2) anderseits verbunden ist, wodurch sich zwischen Oberhaut (1) und oberer Doppelhaut (16) einerseits, und zwischen Unterhaut (2) und unterer Doppelhaut (17) anderseits längs des Landeklappenbereichs Kanäle (19) bilden, die mit Druckluft beaufschlagt werden können, wobei deren Drucke $\Delta p_2$, $\Delta p_3$, vom im Flügel herrschenden Druck $\Delta P_1$ abweichen können, wodurch Teile des Flügels zu Landeklappen umgeformt werden können.

**3.** Pneumatischer adaptiver Flügel nach Patentanspruch 1, **dadurch gekennzeichnet, dass** Mittel zur Veränderung von Höhe und/oder Form des Flügels durch Anwendung von Druckluft so angeordnet und ausgestaltet sind, dass über den Bereich der Querruder die Oberhaut (1) und die Unterhaut (2) durch je eine Doppelhaut (16, 17) ergänzt sind, welche jeweils im wesentlichen in der Mitte zwischen zwei Stegen (3) mit der Oberhaut (1) einerseits und mit der Unterhaut (2) anderseits verbunden ist, wodurch sich zwischen Oberhaut (1) und oberer Doppelhaut (16) einerseits, und zwischen Unterhaut (2) und unterer Doppelhaut (17) anderseits längs des Querruderbereichs Kanäle (19) bilden, die mit Druckluft beaufschlagt werden können, wobei deren Drucke $\Delta p_2$, $\Delta p_3$, vom im Flügel herrschenden Druck $\Delta p_1$ abweichen können, wodurch Teile des Flügels zum Querruder umgeformt werden können.

**4.** Pneumatischer Flügel nach einem der Patentansprüche 1 bis 3, **dadurch gekennzeichnet, dass** die textilen Stege (3) mit Ober- und Unterhaut (1, 2) durch Nähen verbunden sind und mindestens das Abdichten der Nähte nach dem Vernähen erfolgt.

**5.** Pneumatischer Flügel nach einem der Patentansprüche 1 bis 3, **dadurch gekennzeichnet, dass** die textilen Stege (3) im Verbindungsbereich, und Ober- und Unterhaut (1, 2) mindestens im Verbindungsbereich mit schweissbarem Kunststoff kaschiert sind und die Verbindung anschliessend durch Verschweissen der Verbindungsbereiche von Ober- und Unterhaut (1, 2) und textilen Stegen (3) erfolgt.

**6.** Pneumatischer Flügel nach einem der Patentansprüche 1 bis 3, **dadurch gekennzeichnet, dass** im Bereich der Anströmkante (4) des Flügels ein luftdichter Steg (6) eingebaut ist, der gestattet, den Bereich der Anströmkante (4) unter einen höheren Druck zu setzen, als den restlichen Teil des Flügels.

**7.** Pneumatischer Flügel nach einem der Patentansprüche 1 bis 3, **dadurch gekennzeichnet, dass** im Bereich der Abströmkante (5) des Flügels ein luftdichter Steg (7) eingebaut ist, der gestattet, den Bereich der Abströmkante (5) unter einen anderen Druck zu setzen, als den restlichen Teil des Flügels.

**8.** Pneumatischer Flügel nach einem der Patentansprüche 1 bis 3, **dadurch gekennzeichnet, dass** die Stege (3, 6, 7) aus dehnungsarmem Gewebe (13) gefertigt sind, wobei der Fadenverlauf der Gewebe (13) im wesentlichen parallel und senkrecht zur Fläche des Flügels gerichtet ist.

**9.** Pneumatischer Flügel nach Patentanspruch 8, **dadurch gekennzeichnet, dass** das Gewebe (13) eines Steges (3, 6, 7) mindestens im Bereich der Flügelwurzel durch ein zweites Gewebe (14) verdoppelt ist, wobei das zweite Gewebe (14) eng auf dem ersten Gewebe (13) aufliegt und mit diesem zusammen mit Unter- und Oberhaut (1, 2) vernäht ist, wobei der Fadenverlauf des zweiten Gewebes in bezug auf jenen des ersten Gewebes(13) um etwa 45° verdreht ist.

**10.** Pneumatischer Flügel nach Patentanspruch 9, **dadurch gekennzeichnet, dass** mehr als ein erstes Gewebe (13) pro Steg (3, 6, 7) vorhanden ist.

**11.** Pneumatischer Flügel nach Patentanspruch 9, **dadurch gekennzeichnet, dass** mehr als ein zweites Gewebe (14) pro Steg (3, 6, 7) vorhanden ist.

**12.** Pneumatischer Flügel nach einem der Patentansprüche 1 bis 3, **dadurch gekennzeichnet, dass** die untere Doppelhaut (17) sich über eine grössere Zahl von Stegen (3) erstreckt als die obere Doppelhaut (16).

**13.** Pneumatischer Flügel nach einem der Patentansprüche 1 bis 3, **dadurch gekennzeichnet, dass** die obere Doppelhaut (16) sich über die gleiche Zahl von Stegen (3) erstreckt wie die untere Doppelhaut (17).

**14.** Pneumatischer Flügel nach Patentanspruch 2 oder 3, **dadurch gekennzeichnet, dass** der die Doppelhäute (16, 17) aufweisende Bereich des pneumatischen Flügels nur einen Teil der Spannweite des Flügels umfasst.

**15.** Pneumatischer Flügel nach Patentanspruch 2 oder 3, **dadurch gekennzeichnet, dass** der die Doppelhäute (16, 17) aufweisende Bereich des Flügels im wesentlichen die ganze Spannweite des Flügels umfasst.

**16.** Pneumatischer Flügel nach einem der Patentansprüche 1 bis 3, **dadurch gekennzeichnet, dass** die Mittel, um sowohl die Höhe als auch die Form des Flügels durch Anwendung von Druckluft zu verändern, darin bestehen, dass

- im wesentlichen die ganze Unterhaut (2) des Flügels mit einer Doppelhaut (17) versehen ist,
- im wesentlichen alle textilen Stege (3) bereichsweise doppelwandig ausgeführt sind, so dass sich längs verlaufende Kanäle (28) ergeben, die mit Druckluft beaufschlagt werden können,
- und dass Höhen- und Formveränderung des Flügels durch abgestimmtes Zusammenwirken der Druckveränderungen in den Kanälen (19) auf der Unterseite des Flügels und den Kanälen (28) in den Stegen (3) bewirkt werden kann.

**17.** Pneumatischer Flügel nach Patentanspruch 16, **dadurch gekennzeichnet, dass** alle Kanäle (19) in den Stegen (3) den gleichen Druck aufweisen.

**18.** Pneumatischer Flügel nach Patentanspruch 16, **dadurch gekennzeichnet, dass** die Kanäle (19) in den Stegen (3) durch unterschiedliche Drücke versorgt werden.

**19.** Pneumatischer Flügel nach einem der Patentansprüche 1 bis 3, **dadurch gekennzeichnet, dass**

- im Bereich der Abströmkante des Flügels ein Teil des Flügels gleich aufgebaut ist wie dieser, jedoch druckmässig von diesem abgeschlossen ist und einen kleineren Druck aufweist, der Flügel somit gegliedert ist in einen Tragflügel (31) und ein Querruder (32),
- die hinterste Zelle (33) des Tragflügels mit der vordersten Zelle (34) des Querruders (32) nur in einem schmalen mittleren Bereich, jedoch über die ganze Länge des Querruders (32) verbunden ist,
- dass ein oberer Aktuator (35) und ein unterer Aktuator (36) vorhanden sind,
- der obere Aktuator (35) an der Oberhaut (1) des Tragflügels (31) und an jener des Querruders (32) über die ganze Länge des Querruders (32) befestigt ist,
- der untere Aktuator (36) an der Oberhaut (1) des Tragflügels (31) und an jener des Querruders (32) über die ganze Länge des Querruders (32) befestigt ist,
- die Aktuatoren (35, 36) aus je einer Doppelhaut (37, 38) bestehen, die entlang von Längslinien (38) miteinander verbunden sind und zwischen den Längslinien mit Druck beaufschlagbare Kanäle (19) aufweisen, wobei die Aktuatoren (35, 36) durch Beaufschlagen mit Druckluft sich in Strömungsrichtung des Flügels verkürzen.

**20.** Pneumatischer Flügel nach einem der Patentansprüche 1 bis 3, 16 bis 19, **dadurch gekennzeichnet, dass** die Kanäle (19) mit Druckluftleitungen in Verbindung stehen, durch welche der Druck in den Kanälen (19) den Flugerfordernissen angepasst werden kann.

**21.** Pneumatischer Flügel nach einem der Patentansprüche 1 bis 3, 12 bis 16 und 19, **dadurch gekennzeichnet, dass** die Doppelhäute (16, 17, 37, 38) luftdicht mit Kunststoff kaschiert sind.

**22.** Pneumatischer Flügel nach einem der Patentansprüche 1 bis 3, 12 bis 20, **dadurch gekennzeichnet, dass**

- pro Kanal (19) ein luftdichter und an beiden Enden luftdicht abgeschlossener elastomerer Schlauch (21) vorhanden ist, der in den Kanal (19) längs eingelegt ist und im wesentlichen die gleichen Dimensionen aufweist, wie dieser,
- ein Druckschlauch (22) in den elastomeren Schlauch (21) mündet, der dadurch mit Druckluft beaufschlagt werden kann,
- die Doppelhäute (16, 17, 37, 38) nicht luftdicht sind.

**23.** Pneumatischer Flügel nach einem der Patentansprüche 1 bis 3, **dadurch gekennzeichnet, dass** die Doppelhäute (16, 17) mit Ober- und Unterhaut (1, 2) vernäht sind.

**24.** Pneumatischer Flügel nach einem der Patentansprüche 1 bis 3, **dadurch gekennzeichnet, dass** die Doppelhäute (16, 17) mit Ober- und Unterhaut (1, 2) verschweisst sind.

**Claims**

**1.** An adaptive pneumatic wing for an aircraft, to be filled with compressed air, with a leading edge (4) and a trailing edge (5), which comprises an airtight, textile envelope (8), divided into an airtight upper skin (1) forming the upper covering of the wing and an airtight lower skin (2) forming the lower covering of the wing and a plurality of textile webs (3) joining the upper skin (1) and the lower skin (2), **characterised in that**

- the webs (3) are assembled such that the fastening points of the webs (3) to the upper skin (1) and to the lower skin (2) are given by the touching points (10,11) of osculating spheres (26) each inserted in the wing profile so that forces generated by the interplay of tensile stress and pressure tensors at these attachment points give the wing the intended shape,

- the webs (3) are joined to the upper and lower skins (1, 2) along lines of attachment (25, 27), of which the first (25) is established corresponding to the necessary bending stiffness of the wing on one of the skins (1, 2) and the second (27) on the other skin (2, 1) is given as joining all the touching points of the osculating spheres between the upper skin (1) and the lower skin (2) which touch the first joint line (25) and the other skin (2, 1),
- at least some of the webs (3) are air permeable,
- the distance $\underline{B}$ between webs (3) is essentially proportional to the height of the wing at each location,
- means are provided to change both the height and the shape of the wing by the application of compressed air, which comprise the presence of a double skin (16, 17, 37, 38) in the upper skin (1) and/or in the lower skin (2) and/or in webs (3), which forms airtight channels (19, 28) which can separately be impacted with pressure.

2. A pneumatic adaptive wing in accordance with Claim 1, **characterised in that** means for modifying the height and/or shape of the wing by the application of compressed air are so arranged and formed, that over the region of the landing flaps the upper skin (1) and the lower skin (2) are each supplemented by a double skin (16, 17) which are each joined essentially in the middle between two webs (3) on the one hand to the upper skin (1) and on the other to the lower skin (2), whereby between the upper skin (1) and the upper double skin (16) on the one hand and between the lower skin (2) and the lower double skin (17) on the other, channels (19) are formed along the region of the landing flaps which can be inflated with compressed air, whereby their pressures $\Delta p_2$, $\Delta p_3$ can deviate from the pressure $\Delta p_1$ applying in the wing, whereby parts of the wing can be converted to landing flaps.

3. A pneumatic adaptive wing in accordance with Claim 1, **characterised in that** means for modifying the height and/or shape of the wing by the application of compressed air are so arranged and formed that over the region of the ailerons the upper skin (1) and the lower skin (2) are each supplemented by a double skin (16, 17) which are each joined essentially in the middle between two webs (3) on the one hand to the upper skin (1) and on the other to the lower skin (2), whereby between the upper skin (1) and the upper double skin (16) on the one hand and between the lower skin (2) and the lower double skin (17) on the other, channels (19) are formed along the region of the ailerons which can be inflated with compressed air, whereby their pressures $\Delta p_2$, $\Delta p_3$ can deviate from the pressure $\Delta p_1$ applying in the wing, whereby parts of the wing can be converted to ailerons.

4. A pneumatic adaptive wing in accordance with one of the Claims 1 to 3, **characterised in that** the textile webs (3) are joined to the upper and lower skins (1, 2) by sewing and that the stitches are at least made airtight following sewing.

5. A pneumatic wing in accordance with one of the Claims 1 to 3, **characterised in that** the textile webs (3), in the area of the joints, and the upper and lower skins (1, 2) at least in the area of the joints are laminated with a weldable plastics material and the joint is then made between the upper and lower skins (1, 2) and the textile webs (3) by the welding of the joint areas.

6. A pneumatic wing in accordance with one of the Claims 1 to 3, **characterised in that** an airtight web (6) is built into the region of the leading edge (4) of the wing, which permits the region of the leading edge (4) to be set under a higher pressure than the remaining part of the wing.

7. A pneumatic wing in accordance with one of the Claims 1 to 3, **characterised in that** an airtight web (7) is built in the region of the trailing edge (5) of the wing, which permits the region of the trailing edge (5) to be set under a different pressure than the remaining part of the wing.

8. A pneumatic wing in accordance with one of the Claims 1 to 3, **characterised in that** the textile webs (3, 6, 7) are manufactured from low-stretch material (13), whereby the run of the threads of the fabric (13) is directed essentially parallel and perpendicular to the surface of the wing.

9. A pneumatic wing in accordance with Claim 8, **characterised in that** the fabric (13) of a web (3, 6, 7) is doubled at least in the region of the wing root, by a further fabric (14), whereby the second fabric (14) lies closely onto the first fabric (13) and is sewn to it as well as to the lower and upper skin (1, 2), whereby the run of the threads of the second fabric is rotated by some 45° in relation to the first fabric (13).

10. A pneumatic wing in accordance with Claim 9, **characterised in that** more than one first fabric (13) is provided per web (3, 6, 7).

**11.** A pneumatic wing in accordance with Claim 9, **characterised in that** more than one second fabric (14) is provided per web (3, 6, 7).

**12.** A pneumatic wing in accordance with one of the Claims 1 to 3, **characterised in that** the lower double skin (17) extends over a larger number of webs (3) than the upper double skin (16).

**13.** A pneumatic wing in accordance with one of the Claims 1 to 3, **characterised in that** the upper double skin (16) extends over the same number of webs (3) as the lower double skin (17).

**14.** A pneumatic wing in accordance with Claim 2 or Claim 3, **characterised in that** the region of the pneumatic wing which has double skins (16, 17) encompasses only a part of the span width of the wing.

**15.** A pneumatic wing in accordance with Claim 2 or Claim 3, **characterised in that** the region of the pneumatic wing which has double skins (16, 17) encompasses essentially the whole the span width of the wing.

**16.** A pneumatic wing in accordance with one of the Claims 1 to 3, **characterised in that** the means of changing both the height and also the shape of the wing by the application of compressed air comprise

- that essentially the whole lower skin (2) of the wing is provided with a double skin (17),
- that essentially all the textile webs (3) are manufactured with regions of double walls so that lengthwise running channels (28) result, which can be inflated with compressed air,
- and that height and shape changing of the wing can be effected by the co-ordinated combined working of pressure changes in the channels (19) on the underside of the wing and the channels (28) in the webs (3).

**17.** A pneumatic wing in accordance with Claim 16, **characterised in that** all the channels (19) in the webs (3) have the same pressure.

**18.** A pneumatic wing in accordance with Claim 16, **characterised in that** the channels (19) in the webs (3) are supplied with different pressures.

**19.** A pneumatic wing in accordance with one of the Claims 1 to 3, **characterised in that**

- in the region of the trailing edge of the wing a part of the wing is similarly constructed to the remainder, however is separated from it in the pressure sense and has a lower pressure, the wing is thereby divided into a carrying wing (31) and an aileron (32),
- the rearmost cells (33) of the carrying wing are joined to the foremost cells (34) of the aileron (32) only in a narrow region, however extending over the whole length of the aileron (32),
- that an upper actuator (35) and a lower actuator (36) are present,
- the upper actuator (35) is fastened to the upper skin (1) of the carrying wing (31) and to that of the aileron (32) over the whole length of the aileron (32),
- the lower actuator (36) is fastened to the lower skin (2) of the carrying wing (31) and to that of the aileron (32) over the whole length of the aileron (32),
- the actuators (35, 36) each comprise a double skil (37, 18), which are joined together along longitudinal lines (38) and have channels (19) between the longitudinal lines, which can be inflated with pressure, whereby the actuators (35, 36) shorten in the direction of the air flow of the wing by the application of compressed air.

**20.** A pneumatic wing in accordance with one of the Claims 1 to 3, 16 to 19, **characterised in that** the channels (19) are connected to compressed air lines, through which the pressure in the channels (19) can be matched to the flight requirements.

**21.** A pneumatic wing in accordance with any one of Claims 1 to 3, 12 to 16 and 19, **characterised in that** the double skins (16, 17, 37, 38) are laminated with plastics material so as to be airtight.

**22.** A pneumatic wing in accordance with any one of Claims 1 to 3, 12 to 20, **characterised in that**

- for each channel (19) an airtight elastomeric tube (21), hermetically sealed at each end, is provided, which is positioned lengthwise in the channel (19) and essentially has the same dimensions as it,
- a pressure tube (22) opens into the elastomeric tube (21), which can thereby be inflated with compressed air,
- the double skins (16, 17, 37, 38) are not airtight.

**23.** A pneumatic wing in accordance with Claims 1 to 3, **characterised in that** the double skins (16, 17) are sewn to the upper and lower skins (1, 2).

**24.** A pneumatic wing in accordance with Claims 1 to 3, **characterised in that** the double skins (16, 17) are welded to the upper and lower skins (1, 2).

## Revendications

1. Aile adaptable pneumatique à remplir d'air comprimé, avec un bord marginal intérieur (4) et un bord marginal extérieur (5), pour un aéronef, composée d'une enveloppe textile (8) étanche à l'air qui est divisée en un revêtement supérieur (1) étanche à l'air formant la couverture supérieure de l'aile, et un revêtement inférieur (2) étanche à l'air formant la couverture inférieure de l'aile, et d'une multiplicité de nervures textiles (3) qui relient les revêtements supérieur (1) et inférieur (2),

   **caractérisée en ce que**

   - les nervures (3) sont insérées de telle sorte que leurs points de fixation avec les revêtements supérieur (1) et inférieur (2) soient définis par les points de contact (10, 11) des sphères de courbure (26) placées dans le profil d'aile, de sorte que les forces produites dans ces points de fixation par la coopération de tenseurs de traction et de pression donnent à l'aile la forme prévue,
   - les nervures (3) sont reliées aux revêtements supérieur et inférieur (1, 2) le long de lignes de liaison (25, 27), la première (25) étant déterminée sur l'un des revêtements (1, 2) suivant la rigidité flexionnelle nécessaire de l'aile tandis que la seconde (27) résulte, sur l'autre revêtement (2, 1), de la liaison de tous les points de contact des sphères de courbure entre les revêtements supérieur (1) et inférieur (2), qui touchent la première ligne de liaison (25) et l'autre revêtement (2, 1),
   - une partie au moins des nervures (3) sont perméables à l'air,
   - l'écartement mutuel $\underline{B}$ entre les nervures (3) est sensiblement proportionnel à la hauteur locale de l'aile,
   - il est prévu des moyens pour modifier la hauteur et/ou la forme de l'aile grâce à l'utilisation d'air comprimé, lesquels moyens consistent à prévoir dans le revêtement supérieur (1) et/ou dans le revêtement inférieur (2) et/ou dans des nervures (3) un revêtement double (16, 17, 37, 38) formant des canaux (19, 28) étanches à l'air qui peuvent être sollicités séparément par une pression.

2. Aile adaptable pneumatique selon la revendication 1, **caractérisée en ce que** des moyens pour modifier la hauteur et/ou la forme de l'aile grâce à l'utilisation d'air comprimé sont disposés et conçus de telle sorte que sur la zone des volets d'atterrissage, les revêtements supérieur (1) et inférieur (2) sont complétés par des revêtements doubles respectifs (16, 17) qui sont reliés pratiquement à mi-distance entre deux nervures (3) au revêtement supérieur (1), d'une part, et au revêtement inférieur (2), d'autre part, ce qui forme entre le revêtement supérieur (1) et le revêtement double supérieur (16), d'une part, et entre le revêtement inférieur (2) et le revêtement double inférieur (17), d'autre part, le long de la zone des volets d'atterrissage, des canaux (19) qui peuvent être sollicités par de l'air comprimé, la pression $\Delta p_2$, $Ap_3$ de ces canaux pouvant être différente de la pression $\Delta p_1$ qui règne dans l'aile, moyennant quoi des parties de l'aile peuvent être transformées en volets d'atterrissage.

3. Aile adaptable pneumatique selon la revendication 1, **caractérisée en ce que** des moyens pour modifier la hauteur et/ou la forme de l'aile grâce à l'utilisation d'air comprimé sont disposés et conçus de telle sorte que sur la zone des ailerons, les revêtements supérieur (1) et inférieur (2) sont complétés par des revêtements doubles respectifs (16, 17) qui sont reliés pratiquement à mi-distance entre deux nervures (3) au revêtement supérieur (1), d'une part, et au revêtement inférieur (2), d'autre part, ce qui forme entre le revêtement supérieur (1) et le revêtement double supérieur (16), d'une part, et entre le revêtement inférieur (2) et le revêtement double inférieur (17), d'autre part, le long de la zone des ailerons, des canaux (19) qui peuvent être sollicités par de l'air comprimé, la pression $\Delta p_2$, $\Delta p_3$ de ces canaux pouvant être différente de la pression $\Delta p_1$ qui règne dans l'aile, moyennant quoi des parties de l'aile peuvent être transformées en ailerons.

4. Aile pneumatique selon l'une des revendications 1 à 3, **caractérisée en ce que** les nervures textiles (3) sont reliées aux revêtements supérieur et inférieur (1, 2) par piquage, et les piqûres, au moins, sont rendues étanches après le piquage.

5. Aile pneumatique selon l'une des revendications 1 à 3, **caractérisée en ce que** les nervures textiles (3), dans la zone de liaison, et les revêtements supérieur et inférieur (1, 2), au moins dans la zone de liaison, sont doublés avec une matière plastique apte à être soudée, et la liaison se fait ensuite par soudage des zones de liaison des revêtements supérieur et inférieur (1, 2) et des nervures textiles (3).

6. Aile pneumatique selon l'une des revendications 1 à 3, **caractérisée en ce qu'**il est prévu, insérée dans la zone du bord marginal intérieur (4) de l'aile, une nervure étanche à l'air (6) qui permet de soumettre la zone de ce bord (4) à une pression supérieure par rapport au reste de l'aile.

7. Aile pneumatique selon l'une des revendications 1 à 3, **caractérisée en ce qu'**il est prévu, dans la zone du bord marginal extérieur (5) de l'aile, une nervure étanche à l'air (7) qui permet de soumettre la zone de ce bord (5) à une pression différente par rapport au reste de l'aile.

8. Aile pneumatique selon l'une des revendications 1 à 3, **caractérisée en ce que** les nervures (3, 6, 7) sont fabriquées à partir d'un tissu (13) faiblement extensible, les fils des tissus (13) étant sensiblement parallèles et perpendiculaires à la surface de l'aile.

9. Aile pneumatique selon la revendication 8, **caractérisée en ce que** le tissu (13) d'une nervure (3, 6, 7) est doublé au moins dans la zone de l'emplanture par un second tissu (14), lequel second tissu (14) est posé tout contre le premier tissu (13) et est cousu à celui-ci avec les revêtements inférieur et supérieur (1, 2), les fils du second tissu étant tournés d'environ 45° par rapport à ceux du premier tissu (13).

10. Aile pneumatique selon la revendication 9, **caractérisée en ce qu'**il est prévu plus d'un premier tissu (13) sur chaque nervure (3, 6, 7).

11. Aile pneumatique selon la revendication 9, **caractérisée en ce qu'**il est prévu plus d'un second tissu (14) pour chaque nervure (3, 6, 7).

12. Aile pneumatique selon l'une des revendications 1 à 3, **caractérisée en ce que** le revêtement double inférieur (17) s'étend sur un plus grand nombre de nervures (3) que le revêtement double supérieur (16).

13. Aile pneumatique selon l'une des revendications 1 à 3, **caractérisée en ce que** le revêtement double supérieur (16) s'étend sur le même nombre de nervures (3) que le revêtement double inférieur (17).

14. Aile pneumatique selon la revendication 2 ou 3, **caractérisée en ce que** la zone de l'aile pneumatique qui comporte les revêtements doubles (16, 17) ne couvre qu'une partie de l'envergure de l'aile.

15. Aile pneumatique selon la revendication 2 ou 3, **caractérisée en ce que** la zone de l'aile qui comporte les revêtements doubles (16, 17) couvre pratiquement toute l'envergure de l'aile.

16. Aile pneumatique selon l'une des revendications 1 à 3, **caractérisée en ce que** les moyens pour modifier aussi bien la hauteur que la forme de l'aile grâce à l'utilisation d'air comprimé résident dans le fait que

   - pratiquement tout le revêtement inférieur (2) de l'aile est pourvu d'un revêtement double (17),
   - pratiquement toutes les nervures textiles (3) sont réalisées, par zones, avec une double paroi, ce qui donne des canaux (28) qui s'étendent longitudinalement et qui peuvent être sollicités par de l'air comprimé,
   - et la modification de la hauteur et de la forme de l'aile peut être obtenue grâce à l'action conjointe adaptée des variations de pression dans les canaux (19) du côté inférieur de l'aile et dans les canaux (28) des nervures (3).

17. Aile pneumatique selon la revendication 16, **caractérisée en ce que** tous les canaux (19) prévus dans les nervures (3) présentent la même pression.

18. Aile pneumatique selon la revendication 16, **caractérisée en ce que** les canaux (19) prévus dans les nervures (3) sont alimentés avec des pressions différentes.

19. Aile pneumatique selon l'une des revendications 1 à 3, **caractérisée en ce que**

   - dans la zone du bord marginal extérieur de l'aile, une partie de l'aile a la même structure que celle-ci, mais est isolée de celle-ci en matière de pression et présente une pression inférieure, et l'aile est ainsi divisée en une aile portante (31) et un aileron (32),
   - la cellule arrière (33) de l'aile portante n'est reliée à la cellule avant (34) de l'aileron (32) que dans une zone centrale étroite, mais sur toute la longueur de l'aileron (32),
   - il est prévu un actionneur supérieur (35) et un actionneur inférieur (36),
   - l'actionneur supérieur (35) est fixé au revêtement supérieur (1) de l'aile portante (31) et à celui de l'aileron (32) sur toute la longueur de l'aileron (32),
   - l'actionneur inférieur (36) est fixé au revêtement supérieur (1) de l'aile portante (31) et à celui de l'aileron (32) sur toute la longueur de l'aileron (32),
   - les actionneurs (35, 36) se composent de revêtements doubles respectifs (37, 38) qui sont reliés entre eux le long de lignes longitudinales (38) et qui comportent entre les lignes longitudinales des canaux (19) aptes à être sollicités par une pression, les actionneurs (35, 36) raccourcissant dans le sens du courant de l'aile lorsqu'ils sont sollicités par de l'air comprimé.

20. Aile pneumatique selon l'une des revendications 1 à 3, 16 à 19, **caractérisée en ce que** les canaux (19) communiquent avec des conduites d'air comprimé grâce auxquelles la pression qui règne dans les canaux (19) peut être adaptée aux exigences de vol.

**21.** Aile pneumatique selon l'une des revendications 1 à 3, 12 à 16 et 19, **caractérisée en ce que** les revêtements doubles (16, 17, 37, 38) sont doublés de manière étanche à l'air avec une matière plastique.

**22.** Aile pneumatique selon l'une des revendications 1 à 3, 12 à 20, **caractérisée en ce que**

- pour chaque canal (19), il est prévu un tuyau en élastomère (21), étanche à l'air et fermé de manière étanche à l'air à ses deux extrémités, qui est placé longitudinalement dans le canal (19) et qui présente sensiblement les mêmes dimensions que celui-ci,
- un tuyau de pression (22) débouche dans le tuyau en élastomère (21), qui peut ainsi être sollicité par de l'air comprimé,
- les revêtements doubles (16, 17, 37, 38) ne sont pas étanches à l'air.

**23.** Aile pneumatique selon l'une des revendications 1 à 3, **caractérisée en ce que** les revêtements doubles (16, 17) sont cousus aux revêtements supérieur et inférieur (1, 2).

**24.** Aile pneumatique selon l'une des revendications 1 à 3, **caractérisée en ce que** les revêtements doubles (16, 17) sont soudés aux revêtements supérieur et inférieur (1, 2).

Fig. 1

Fig. 2

Fig. 3

Fig. 5

Fig. 6

Fig. 7

**Fig. 8**

**Fig. 9**

**Fig. 10**

Fig. 4

a)

b)

Fig. 11

**Fig. 12**

**Fig. 13**